(19) **Europäisches Patentamt / European Patent Office / Office européen des brevets**

(11) **EP 1 992 394 B1**

(12) **EUROPEAN PATENT SPECIFICATION**

(45) Date of publication and mention
of the grant of the patent:
**05.05.2010 Bulletin 2010/18**

(51) Int Cl.:
***B01D 46/24*** *(2006.01)*

(21) Application number: **08004031.4**

(22) Date of filing: **04.03.2008**

(54) **Honeycomb filter**

Wabenfilter

Filtre en nids d'abeilles

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **07.05.2007 PCT/JP2007/059469**

(43) Date of publication of application:
**19.11.2008 Bulletin 2008/47**

(73) Proprietor: **IBIDEN CO., LTD.
Ogaki-shi
Gifu 503-8604 (JP)**

(72) Inventors:
• **Oya, Tomokazu**
**Ibi-gun**
**Gifu 501-0695 (JP)**
• **Ogyu, Kazutake**
**Ibi-gun**
**Gifu 501-0695 (JP)**

(74) Representative: **HOFFMANN EITLE
Patent- und Rechtsanwälte
Arabellastrasse 4
81925 München (DE)**

(56) References cited:
**WO-A-2007/070344    JP-A- 2007 237 012
US-A1- 2004 176 246    US-A1- 2005 266 991**

EP 1 992 394 B1

**Description**

TECHNICAL FIELD

The present invention relates to a honeycomb filter.

BACKGROUND ART

Recently, particulate matters (hereinafter, also simply referred to as particulates or PMs), which are contained in exhaust gases discharged from internal combustion engines of vehicles, such as buses and trucks, and construction machines and the like, have raised serious problems as those particulates are harmful to the environment and the human body.
Therefore, various kinds of honeycomb filters (honeycomb structured body) made of porous ceramics have been proposed as filters for capturing particulates contained in exhaust gases and thereby purifying the exhaust gases.

Patent Document 1 discloses a pillar-shaped honeycomb structured body that mainly includes inorganic fibers and in which a large number of through holes are disposed in parallel with one another in a longitudinal direction with a wall portion therebetween, and many more inorganic fibers forming the honeycomb structured body are oriented along the plane perpendicular to the formation direction of the through holes in comparison to the plane parallel to the formation direction of the through holes.

The honeycomb structured body disclosed in Patent Document 1 mainly includes inorganic fibers to realize a honeycomb structured body having sufficient strength and a high porosity.

In addition, Patent Document 1 indicates that a catalyst may be adhered to the inorganic fibers forming the honeycomb structured body in order to purify exhaust gases.

Patent Document 1: WO 2005/000445 A1

DISCLOSURE OF THE INVENTION PROBLEMS TO BE SOLVED BY THE INVENTION

Since the honeycomb structured body disclosed in Patent Document 1 has a high porosity, it is possible to maintain pressure loss at a low level.
However, upon capturing PMs in exhaust gases, the honeycomb filter having a high porosity may generate capture leakage of the PMs.
As thus described, conventional honeycomb filters have difficulties in achieving a good balance between the conflicting properties: a low pressure loss and a high capture efficiency.

The document US2004/0176246 describes a catalyst filter having a concentration gradient across the thickness of the filter media, such that the highest catalytic particle concentration is at the entrance to the filter media.

MEANS FOR SOLVING THE PROBLEMS

Then, the present inventors have made earnest investigations to achieve a good balance between the conflicting properties: a low pressure loss and a high capture efficiency, and thus have completed the present invention.

That is, a honeycomb filter according to claim 1 comprises: a pillar-shaped honeycomb body in which a plurality of cells are disposed in parallel with one another in a longitudinal direction with a cell wall therebetween, either one of the end portions of each of the cells is sealed, and gases introduced from one end face flow out from an other end face; and ceramic particles supported on the cell wall, a porosity of the cell wall of the honeycomb body being 75 to 95%, and the ceramic particles being supported in such a manner that a concentration of the ceramic particles decreases in the cell wall from a side of a cell in which a gas outlet side is open to a side of another cell in which a gas inlet side is open.

In the honeycomb filter according to claim 1, the ceramic particles are supported on the cell wall of the honeycomb body having a high porosity of 75 to 95%, in such a manner that a concentration of the ceramic particles decreases in the cell wall from a side of a cell in which the gas outlet side is open to a side of another cell in which the gas inlet side is open. In this case, since upon capturing PMs in exhaust gases the PMs enter inside the cell wall and are captured (deep-layer-filtered), it is possible to avoid capture leakage of the PMs without the PMs passing through the cell wall.

In addition, since a PM layer tends not to be formed on the surface of the cell wall upon deep-layer-filtering of PMs, a pressure loss of the honeycomb filter is less likely to increase. For this reason, it is possible to maintain a low pressure loss for a long period of time in the honeycomb filter.

In the honeycomb filter according to claim 2, the ceramic particles are particles containing an oxide catalyst (hereinafter, also referred to as oxide catalyst particles).
In the honeycomb filter according to claim 2, since the ceramic particles are oxide catalyst particles, it is possible to promote combustion and removal of PMs in exhaust gases and furthermore maintain a low pressure loss for a longer period of time, in addition to exerting the effects of the honeycomb filter according to claim 1.

In the honeycomb filter according to claim 3, the ceramic particles are particles containing ceria ($CeO_2$) (ceria-containing particles).

In the honeycomb filter according to claim 3, since the ceramic particles are ceria-containing particles, it is possible to promote combustion and removal of PMs in exhaust gases and furthermore maintain a low pressure loss for a longer period of time, in addition to exerting the effects of the honeycomb filter according to claim 1.

In the honeycomb filter according to claim 4, the honeycomb body mainly includes inorganic fibers.

In the honeycomb filter according to claim 4, the honeycomb body, mainly including inorganic fibers, is suitable for allowing the honeycomb body to have a high porosity.

In the honeycomb filter according to claim 5, the honeycomb body comprises an integrally formed honeycomb member.

In accordance with the honeycomb filter according to claim 5, since the integrally formed honeycomb member can be manufactured through extrusion molding or the like, it is easy to manufacture a honeycomb member.

In the honeycomb filter according to claim 6, the honeycomb body comprises the honeycomb member formed by laminating a plurality of lamination members, with through holes provided therein, in a longitudinal direction in such a manner that the through holes are superimposed on one another.

In the case where the honeycomb body configuring the honeycomb filter comprises the honeycomb member in which the lamination members are laminated just as in the case of the honeycomb filter according to claim 6, even when a big temperature difference arises on the entirety of the honeycomb filter during the regenerating treatment or the like, the temperature difference that is generated on the respective lamination members is small, so is the subsequent thermal stress thereof, resulting in a honeycomb filter less susceptible to damage.

In the honeycomb filter according to claims 7, a member for an end portion is disposed on both end portions of the honeycomb body.

Like the case of the honeycomb filter according to claim 7, it is possible to surely seal either one of the end portions of each of the cells of the honeycomb body by disposing a member for an end portion.

BEST MODE FOR CARRYING OUT THE INVENTION

Hereinafter, embodiments of the present invention will be described in reference to the drawings.

(First embodiment)

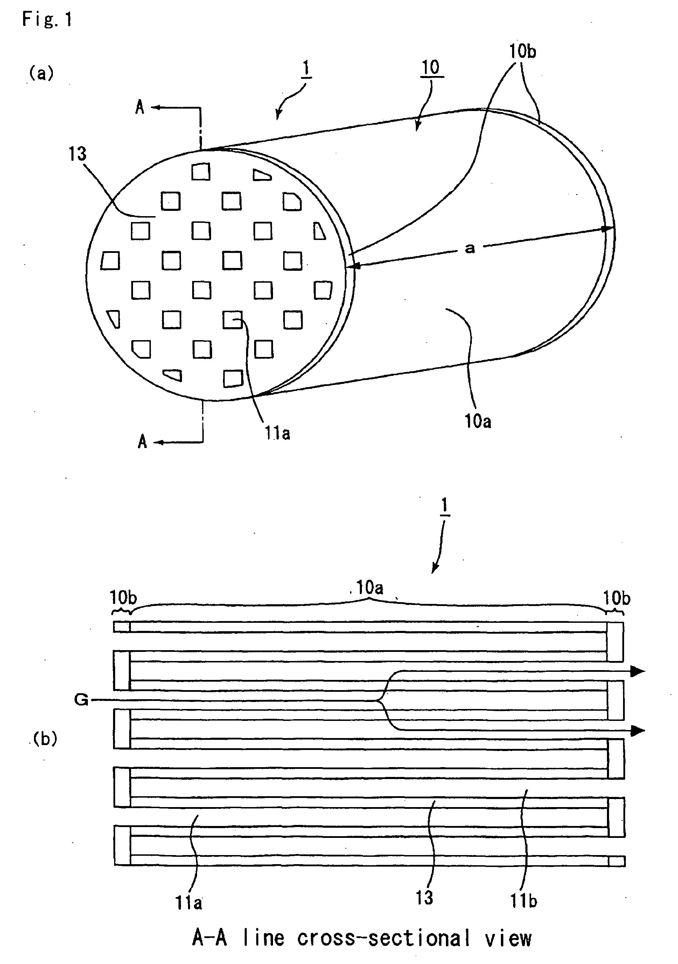

Fig. 1(a) is a perspective view that schematically illustrates one example of a honeycomb filter according to the first embodiment, and Fig. 1 (b) is a cross-sectional view taken along line A-A of Fig. 1(a).

As illustrated in Figs. 1 (a) and 1 (b), a honeycomb filter 1 according to the first embodiment comprises: a honeycomb body 10 made of (A) an integrally formed round pillar-shaped honeycomb member 10a mainly including inorganic fibers, in which a plurality of cells 11a, 11b are disposed in parallel with one another in a longitudinal direction (a direction shown by an arrow a in Fig. 1(a)) with a cell wall 13 therebetween, and (B) a metal member for an end portion 10b that is disposed on both end faces of the honeycomb member 10a so as to seal either one of the end portions of each of the cells 11a, 11b; and ceria particles (not illustrated), which are ceramic particles supported on the cell wall 13.

In the honeycomb filter 1, exhaust gases G introduced from one end face of the honeycomb body 10 (left side in Fig. 1(b)) into a cell 11a (gas inlet cell 11a) are allowed to flow out from a cell 11b (gas outlet cell 11b) in which the other end face (right side in Fig. 1(b)) is open, after always passing through a cell wall 13 separating the cell 11a and the cell 11b.

Accordingly, in the honeycomb filter 1, PMs in the exhaust gases G are captured on the cell wall 13.

Further, ceria particles are supported as ceramic particles on the cell wall 13.

Here, the ceria particles are supported in such a manner that a concentration of the ceria particles decreases in the cell wall 13 from a side of a cell in which the outlet side of the exhaust gases G (gas outlet cell 11b) is open to a side of another cell in which the inlet side of the exhaust gases G (gas inlet cell 11a) is open.

Next, the embodiments in which the ceria particles are supported on the cell wall will be described in reference to the drawings.

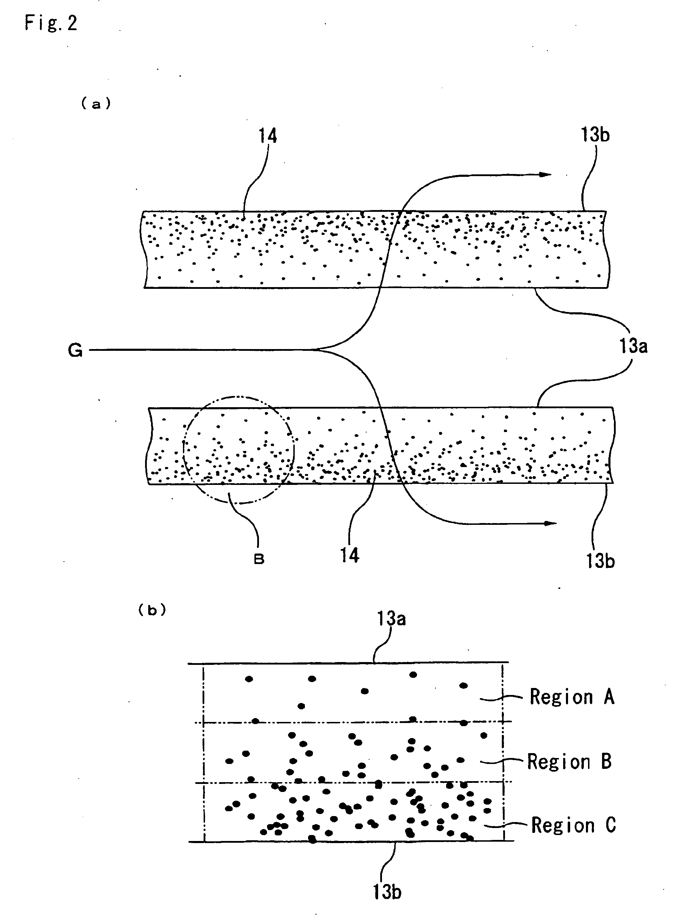

Fig. 2 (a) is a schematic view for describing an embodiment of ceria particles supported on a cell wall, in a honeycomb filter according to the first embodiment. Here, Fig. 2(a) is a partially enlarged schematic view of a portion in Fig. 1(b). And Fig. 2 (b) is a further enlarged schematic view of a portion B in Fig. 2(a).

As illustrated in Fig. 2(a), ceria particles 14 are supported in such a manner that a concentration of the ceria particles decreases in the cell wall 13 from a gas outlet cell side 13b to a gas inlet cell side 13a.

When the concentration gradient is formed, as thus described, so that the concentration of the ceria particles 14 supported on the cell wall 13 decreases in the cell wall from a gas outlet cell side 13b to a gas inlet cell side 13a, the porosity and the pore diameter will be gradually reduced in the cell wall 13 from the gas outlet cell side 13b to the gas inlet cell side 13a. Accordingly, when PMs in exhaust gases are captured in the cell wall 13, the PMs enter inside the cell wall 13 from the gas inlet cell side 13a but cannot pass through the cell wall 13 to the gas outlet cell side 13b.

Here, the ceria particles 14 are indicated by black spots in Fig. 2(a).

Here, in the present invention, the state in which ceria particles are supported in such a manner that a concentration of the ceria particles decreases in the cell wall from a gas outlet cell side to a gas inlet cell side means that the number of ceramic particles observed in the region on the side of the gas outlet cell is greater than the number of ceramic particles observed in the region on the side of the gas inlet cell adjacent to the gas outlet cell, provided that upon observation of the cross section of the cell wall, the cross section of the cell wall is divided into a plurality of equal parts from the gas outlet cell side to the gas inlet cell side (for example, divided into three Regions A to C in Fig. 2(b)). And in the honeycomb filter of the present invention, it is not always necessary for ceramic particles to be supported over the entirety of the cell wall. However, the ceramic particles are desirably supported over the entirety of the cell wall so as to form the concentration gradient. Especially when the ceramic particles are oxide catalyst particles, the ceramic particles are desirably supported over the entirety of the cell wall so as to form the concentration gradient.

This is because in the case where the oxide catalyst particles are supported only in the vicinity of the gas outlet cell side of the cell wall or supported in a layer on the exposed face of the gas outlet side of the cell wall, the number of points of contact between the oxide catalyst particle and PMs will be reduced.

The honeycomb member 10a configuring the honeycomb body 10 mainly includes inorganic fibers, and the cell wall 13 of the honeycomb body 10 has a high porosity of 75 to 95%.

The cell wall 13 of the honeycomb body 10 having a porosity (a porosity of the cell wall on which ceramic particles are not supported) of less than 75% makes it difficult to perform deep-layer filtering of PMs, and also makes it difficult to increase the inner temperature of the honeycomb filter to a temperature necessary for combustion of the PMs upon carrying out a regenerating treatment on the honeycomb filter, leading to reduction in the continuous regenerating capability of the honeycomb filter.

In contrast, the cell wall 13 of the honeycomb body 10 having a porosity of more than 95% makes the percentage of pores in the honeycomb filter too high, making it difficult to properly maintain the strength of the honeycomb filter.

And the average pore diameter of the cell wall 13 of the honeycomb body 10 is desirably 10 to 60 $\mu$m due to its suitability for performing deep-layer filtering of PMs.

The configuration of the honeycomb member 10a will be described in further detail.

The honeycomb member 10a mainly includes inorganic fibers. Specifically, alumina fibers, inorganic fibers, are firmly fixed to one another by interposing a glass as an inorganic matter.

Here, as is not uniform on the entirety of the honeycomb member 10a, the portions at which the alumina fibers are firmly fixed to one another are mainly located at an intersection of the alumina fibers or in the vicinity thereof so that the glass as the inorganic matter is locally located at the intersection of the alumina fibers or in the vicinity thereof.

The state in which inorganic fibers are firmly fixed to one another at an intersection or in the vicinity thereof by interposing an inorganic matter refers to a state in which the inorganic fibers are firmly fixed to one another by interposing the inorganic matter that is locally located (present) at the intersection of the inorganic fibers (with or without mutual contacts among the inorganic fibers), a state in which the inorganic fibers are firmly fixed to one another by interposing the inorganic matter that is locally located (present) in the vicinity of the intersection of the inorganic fibers, or a state in which the inorganic fibers are firmly fixed to one another by interposing the inorganic matter that is locally located (present) over the entire area including the intersection of the inorganic fibers and the vicinity thereof.

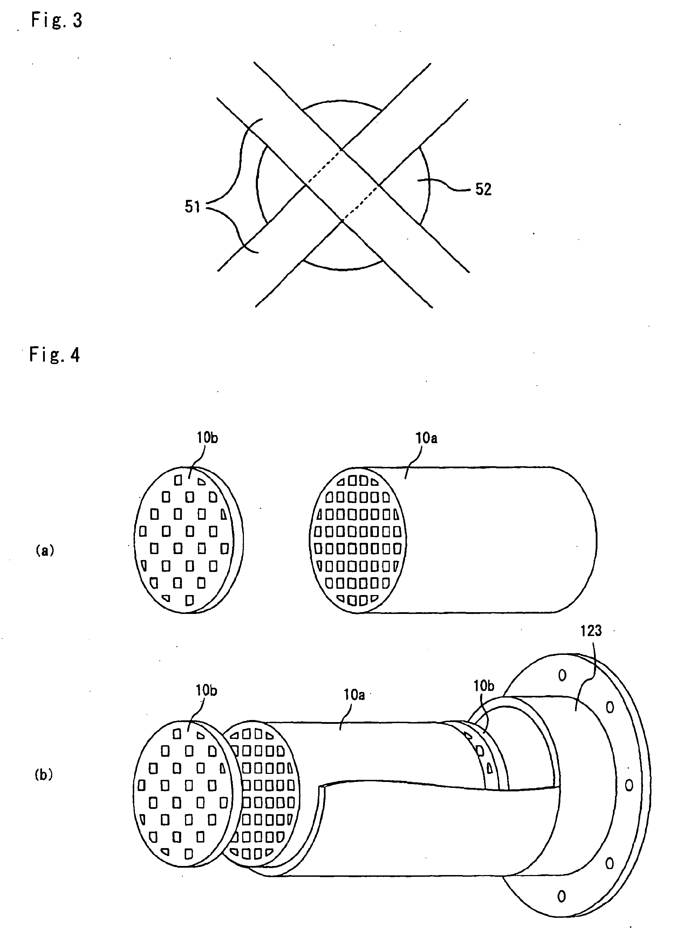

Fig. 3 is a cross-sectional view that schematically illustrates one example of an embodiment of one portion of a honeycomb member 10a in which inorganic fibers are firmly fixed to one another by interposing an inorganic matter. Here, the cross-sectional view of Fig. 3 illustrates a cross section in which crossing inorganic fibers are cut in the length direction.

As illustrated in Fig. 3, a glass 52 as an inorganic matter is firmly fixed at the intersection between the alumina fibers 51 as inorganic fibers or in the vicinity thereof. The glass 52, firmly fixed at the intersection or in the vicinity thereof, serves so as to simultaneously couple two of the alumina fibers to one another at the intersection or in the vicinity thereof.

Here, the glass 52 is firmly fixed at the intersection between the alumina fibers or in the vicinity thereof, by undergoing melting and solidification.

As is illustrated in Fig. 3, in the case where the glass 52 is locally located at the intersection of the alumina fibers 51 or in the vicinity thereof, many of the alumina fibers 51 are coated with the glass 52 at the intersection of the alumina fibers 51 with other alumina fibers 51 or in the vicinity thereof, with the glass being hardly fixed to most of the other portions.

In the present specification, the mutual intersection between the inorganic fibers or the vicinity thereof refers to an area within a distance of ten times the fiber diameter of the inorganic fibers from the point at which the inorganic fibers are in closest contact with one another.

In addition, in the honeycomb member 10a, the number of portions where alumina fibers as inorganic fibers are firmly fixed to one another by interposing a glass as an inorganic matter is not one per one alumina fiber, but there are some alumina fibers that are firmly fixed to one another by interposing a glass at two or more portions. Consequently, in the honeycomb member 10a, many alumina fibers are entangled with one another in a complex manner, which will prevent untangled alumina fibers and lead to a structure with excellent strength.

Members for an end portion 10b configuring the honeycomb body 10 are members disposed on both end portions of the honeycomb body 10 (both end faces of the honeycomb member 10a), and plate-like bodies made of metal in which through holes are formed in a predetermined position.

In the members for an end portion 10b, when the members for an end portion 10b are disposed on both end faces of the honeycomb member 10a, the through holes are formed at portions where the through holes communicates only with predetermined cells of the honeycomb member 10a. More specifically, through holes are formed at positions where the through holes communicate with the gas inlet cells 11a of the honeycomb member 10a, in a member for an end portion 10b disposed on the end face to which the exhaust gases G are introduced (left side in Fig. 1(b)). Meanwhile, in a member for an end portion 10b disposed on the end face from which the exhaust gases G flow out (right side in Fig. 1 (b)), through holes are formed at positions where the through holes communicates with the gas outlet cells 11b of the honeycomb member 10a. Accordingly, the formation positions of the through holes are different in each of the members for an end portion 10b disposed on both end faces of the honeycomb member 10a. And either one of the end portions of each of the cells is sealed by disposing such members for an end portion 10b.

Moreover, in the honeycomb filter disclosed in Figs. 1(a) and 1(b), ceria particles are supported as ceramic particles. However, in the present embodiment, ceramic particles supported on the cell wall may be particles (ceria-containing particles) comprising $K_2O$ and $CeO_2$, $CuO$ and $CeO_2$, or the like, in addition to ceria particles, or may be oxide (other than ceria) catalyst particles.

Examples of the oxide catalyst include $K_2O$, $ZrO_2$, $FeO_2$, $Fe_2O_3$, $CuO$, $CuO_2$, $Mn_2O_3$, $MnO$, and complex oxides indicated by a composition formula $A_nB_{1-n}CO_3$, provided that in the formula, A is La, Nd, Sm, Eu, Gd or Y, B is an alkali metal or alkali-earth metal, and C is Mn, Co, Fe, or Ni.

By supporting such an oxide catalyst as ceramic particles, the burning temperature of particulates can be lowered.

In addition, in the honeycomb filter illustrated in Figs. 1(a) and 1(b), inorganic fibers forming the honeycomb member are alumina fibers, and a material of the inorganic fibers is not limited to alumina. Examples thereof other than alumina include: oxide ceramics such as silica-alumina, mullite, silica, titania and zirconia; nitride ceramics such as silicon nitride and boron nitride; carbide ceramics such as silicon carbide; basalt; or the like. Each of these may be used alone, or two or more kinds of these may be used in combination.

Next, the method for manufacturing the honeycomb filter according to the first embodiment will be described.
(1) A composition for molding is prepared by first mixing alumina fibers that are inorganic fibers mainly forming the honeycomb body, glass fibers that are to firmly fix alumina fibers to one another through the subsequent processes, organic binders, and water, and further mixing a pore-forming agent, a plasticizer, a lubricant, and the like, if necessary.

(2) Subsequently, a pillar-shaped molded body with a large number of cells formed in the longitudinal direction is manufactured by carrying into a plunger-type molding machine the composition for molding, and continuously extruding the composition for molding through a die in which predetermined through holes are formed in the plunger-type molding machine.

(3) Next, a cutting treatment for cutting the extruded molded body to a predetermined length, a drying treatment for removing moisture in the molded body, and a degreasing treatment for removing an organic matter during the molding are carried out.

Here, it is not always necessary to perform the drying treatment and the degreasing treatment.

Here, the cutting treatment can be carried out by using cutting members such as a cutter having a blade formed in the cutting portion, a laser, and a linear member.

Moreover, a desirable cutting method is proposed in which to the end portion to which the molded body molded in the extrusion-molding process is transferred, a molded body cutting machine provided with a cutting means such as a laser and a cutter is installed, and while the cutting means is being transferred at a speed synchronous to the extruding speed of the molding body, the molded body is cut by the cutting means. This is because it is possible to carry out the cutting process continuously by using the cutting apparatus having the mechanism, and consequently to improve the mass productivity.

In addition, the drying treatment may be carried out by using, for example, a microwave heat drying apparatus, a hot-air drying apparatus, an infrared ray drying apparatus or the like, and in this case, a plurality of these apparatuses may be used in combination.

Specifically, in the case of using a hot-air drying apparatus, for example, the drying treatment may be carried out at a set temperature of 100 to 150°C for 5 to 60 minutes under ambient atmosphere. In this case, the arrangement is desirably made so that the hot air is directed to the molded body in parallel with the longitudinal direction thereof so as to allow the hot air to pass through the cells. By allowing the hot air to pass through the cells of the molded body, the drying treatment of the molded body will be carried out efficiently.

Normally, the degreasing treatment is desirably carried out in an oxidizing atmosphere such as ambient atmosphere so as to oxidatively decompose the organic substances. Specifically, the degreasing treatment may be carried out by heating at a set temperature of 200 to 600°C under ambient atmosphere for 1 to 5 hours. With respect to the degreasing furnace used herein, not particularly limited, a batch-type degreasing furnace may be used; however, in order to continuously carry out the treatment, a continuous furnace provided with a belt conveyor is desirably used.

(4) Next, a heating treatment is performed of heating the molded body at a temperature less than the heat-resistant temperature of the inorganic fibers such as alumina fibers and not less than the heat-resistant temperature of the inorganic matter such as glass fibers.

More specifically, the heating treatment may be carried out at a temperature of 900 to 1050°C for 5 to 15 hours.

Through this heating treatment, it is possible to manufacture a honeycomb member in which the alumina fibers are firmly fixed to one another by interposing an inorganic matter comprising the same material as that of the glass fibers.

In addition, an acid treatment may be carried out on the honeycomb member, if necessary, after manufacturing the honeycomb member by this method.

The acid treatment may be conducted by immersing the honeycomb member in a solution such as a hydrochloric acid solution and a sulfuric acid solution. More specifically, the acid treatment may be performed, for example, in the solution having a concentration of 1 to 10 mol/l, at a treatment period of time of 0.5 to 24 hours, and for a treatment temperature of 70 to 100°C.

By carrying out the acid treatment, components other than silica are eluted, so that the heat resistance of the honeycomb member is consequently improved.

Moreover, the acid treatment may be performed during the heating treatment.

More specifically, the following treatments may be carried out: for example, a primary heating treatment is carried out at 950°C for 5 hours, and the acid treatment is then carried out, and a secondary heating treatment is carried out at 1050°C for 5 hours.

(5) Members for an end portion are manufactured separately from the processes (1) to (4).

More specifically, after a metal plate is machined into a disk shape having a predetermined shape, through holes are formed in a predetermined position through a laser machining process or a punching process; thereby the members for an end portion are manufactured.

(6) Next, the members for an end portion are disposed on both end faces of the honeycomb member to form a honeycomb body.

The members for an end portion are disposed on both end faces of the honeycomb member inside a metal casing while positioning both the members for an end portion and the honeycomb member.

This method will be described in reference to the drawings.

Fig. 4(a) is a perspective view that schematically illustrates a honeycomb member and a member for an end portion that configure a honeycomb body, and Fig. 4 (b) is a perspective view for describing a method for providing the member for an end portion on both end portions of the honeycomb body illustrated in Fig. 4(a).

A honeycomb member 10a and two members for an end portion 10b, as illustrated in fig. 4(a), are manufactured, and simultaneously, a metal casing 123 having a can-type (cylindrical) shape with a fixing metal member attached on one side, as illustrated in Fig. 4(b), is prepared separately. First, one member for an end portion 10b is installed on a side of a fixing metal member 123a in the casing 123. Next, the honeycomb member 10a is disposed while being positioned with the member for an end portion 10b pre-placed in the casing 123, and thereafter the other member for an end portion is disposed while being positioned with the honeycomb member 10a. Subsequently, a fixing metal member is installed and fixed to the other side opposite to the side where the above-mentioned fixing metal member is attached.

(7) Next, oxide catalyst particles are supported as ceramic particles on the cell wall of the honeycomb body, and thereby a honeycomb filter comprising the honeycomb body and the catalyst particles supported on the cell wall of the honeycomb body is completed.

More specifically, the oxide catalyst particles are supported in such a manner that a concentration of the oxide catalyst particles decreases in the cell wall from a gas outlet cell side to a gas inlet cell side.

Examples of the oxide catalyst include: a ceria-containing catalyst such as $CeO_2$, $K_2O$ and $CeO_2$, and $CuO$ and $CeO_2$; $K_2O$; $ZrO_2$; $FeO_2$; $Fe_2O_3$; $CuO$; $CuO_2$; $Mn_2O_3$; $MnO$; and complex oxides indicated by a composition formula $A_nB_{1-n}CO_3$, provided that in the formula, A is La, Nd, Sm, Eu, Gd or Y, B is an alkali metal or alkali-earth metal, and C is Mn, Co, Fe or Ni.

First, a gaseous catalyst dispersion is prepared by appropriately grinding an oxide catalyst material, thereafter dispersing it in water and the like to form a slurry, and then dispersing the slurry in gas (for example, gaseous media such as air and inert gas) by a spray method or the like.

Next, the gaseous catalyst dispersion is introduced in the honeycomb body from one end face of the honeycomb body with a flow of a carrier gas.

In this treatment, the carrier gas is introduced from an end face of the gas outlet side of the honeycomb body and allowed to flow out from an end face of the gas inlet side, after always passing through a cell wall (i.e. the carrier gas passes through the path reverse to the path that the exhaust gases G in Fig. 1(b) pass through).

And when the carrier gas passes through a cell wall, the gaseous catalyst dispersion dispersed in the carrier gas will be attached to the cell wall.

Thereafter, the oxide catalyst particles are supported by undergoing a drying treatment, and as needed a firing treatment.

The use of the method enables the oxide catalyst particles to be supported so that a concentration of the oxide catalyst particles decreases in the cell wall of the honeycomb body from a gas outlet cell side to a gas inlet cell side.

In addition, in this method, it is possible to adjust the concentration gradient of the oxide catalyst particles in the cells walls by appropriately varying the inlet velocity of the carrier gas.

Since the oxide catalyst particles are more likely to be supported in the vicinity of the surface of the cell wall as the inlet velocity decreases, it follows that the concentration gradient of the oxide catalyst particles in the cell wall will increase. On the other hand, since as the inlet velocity increases, the oxide catalyst particles are permeated into the cell wall and the ratio of the oxide catalyst particles to be supported rises, it follows that the concentration gradient of the oxide catalyst particles in the cell wall will decrease.

Hereinafter, the effects of the honeycomb filter according to the present embodiment will be cited.

(1) The cell wall of the honeycomb body, having a high porosity, is suitable for capturing PMs by deep-layer filtration. Therefore, the pressure loss of the honeycomb filter tends not to increase.

(2) Since ceramic particles are supported in such a manner that a concentration of the ceramic particles decreases in the cell wall of the honeycomb body from a gas outlet cell side to a gas inlet cell side, it is possible to avoid capture leakage of PMs while performing deep-layer filtering of PMs; furthermore, when the ceramic particles are oxide catalyst particles, such as ceria particles, it is possible to promote combustion and removal of PMs and conversion of exhaust gases.

(3) Since inorganic fibers such as alumina fibers, which mainly form the honeycomb member, are firmly fixed to one another by interposing an inorganic matter such as a glass, the honeycomb body will have high strength as well as high porosity.

The following description will discuss the first embodiment in further detail by Examples, and the present invention is not limited only to these Examples.

(Example 1)

A. Manufacture of honeycomb member

(1) First, 12.3 parts by weight of silica-alumina fibers (average fiber length: 0.3 mm, average fiber diameter: 5 $\mu$m) made of 72% of alumina and 28% of silica, 6.2 parts by weight of glass fibers (average fiber diameter: 9 $\mu$m, average fiber length: 3 mm), 11.7 parts by weight of an organic binder (methyl cellulose), 7.1 parts by weight of a pore-forming agent (acryl), 8.1 parts by weight of a plasticizer (UNILUB, made by NOF Corporation), 3.8 parts by weight of a lubricant (glycerin), and 50.9 parts by weight of water were mixed, and sufficiently stirred to prepare a composition for molding.

(2) The composition for molding was carried in a cylinder from a mixture tank of a plunger-type extrusion-molding machine, and the piston was pressed toward the die side so that the composition (mixture) was extruded through the die to manufacture a round pillar-shaped molded body (diameter of circle: 160 mm) with cells, each having a size of 4.5 mm $\times$ 4.5 mm on the plane perpendicular to the longitudinal direction of the cells, being formed with intervals of 2 mm in the longitudinal direction.

(3) The molded body having a round pillar shape was cut into a length of 60 mm by using a cutting apparatus having a cutting disc as its cutting member. Thus, a molded body having a diameter of 160 mm $\times$ a length of 60 mm in the longitudinal direction was obtained.

(4) The round pillar-shaped molded body, obtained in the process (3), was dried at 200°C for 3 hours under ambient atmosphere by using a microwave drying apparatus and a hot-air drying apparatus so that moisture contained in the molded body was removed.

(5) The molded body, obtained through the drying treatment, underwent a degreasing treatment for removing organic substances contained in the molded body by heating on the molded body at 400°C for 3 hours in an electric furnace under ambient atmosphere.

(6) The molded body, obtained through the degreasing treatment, underwent a heating treatment at 950°C for 5 hours in a firing furnace under ambient atmosphere. Thereafter, the resulting molded body was immersed into an HCl solution of 4 mol/l at 90°C for one hour so that an acid treatment was carried out thereon, and this again underwent a heating treatment at 1050°C for 5 hours in a firing furnace under ambient atmosphere to manufacture a honeycomb member.

Here, through the process (6), alumina fibers were firmly fixed to one another by interposing a glass.

Also, the honeycomb members, obtained through the processes (1) to (6), were measured for the porosities and average pore diameters by the following method. Of course, the honeycomb members for measuring samples were separately manufactured.

Specifically, in compliance with JIS R 1655, by using a fine-pore distribution measuring device (AUTOPORE III 9405, manufactured by Shimadzu Corp.) using mercury porosimetry, 1 cm cubic portions were cut from the central portions of each of the honeycomb members as samples, and the fine-pore distributions of the honeycomb members were measured by mercury porosimetry in a fine-pore diameter range of 0.2 to 500 μm. The resulting average fine-pore diameter was calculated as (4V/A), thereby calculating the porosities and average pore diameters thereof. Here, the number of samples was set to 10 pics.

Table 1 shows the results.

B. Manufacture of member for end portion

After a metal plate made of Ni-Cr alloy had been machined into a disc shape having a diameter of 160 mm × a thickness of 1 mm, a laser machining process is carried out on this so that a member for an end portion with through holes of 4.5 mm × 4.5 mm formed in a predetermined position was manufactured.

Two members for an end portion were manufactured in this process, and through holes were formed in each of these members for an end portion at mutually different positions so that portions of the sealed cells were made different between one end face and the other end face of the honeycomb body when the members for an end portion were disposed in the subsequent process.

C. Manufacture of honeycomb body

First, a casing (see Fig. 4(b)) having a can-type (cylindrical) shape made of SUS with a fixing metal member disposed on one side was prepared and vertically placed with the side on which the fixing metal member had been installed facing down. One member for an end portion, obtained in the process B, was first placed therein, and then one honeycomb member, obtained in the process A, was placed on the member for an end portion while the through holes of the member for an end portion being positioned with the cells of the honeycomb member, and lastly, the other member for an end portion was placed on the honeycomb member, and subsequently the fixing metal member was installed and fixed to the other end of the casing; thus, a honeycomb body placed in the casing was manufactured.

In this process, the members for an end portion were disposed in such a manner that portions of the sealed cells were made different between the end face on the inlet side and the end face on the outlet side of the honeycomb body (i.e. so that only either one of the end portions of each of the cells was sealed) .

D. Manufacture of honeycomb filter

Ceria particles having an average particle diameter of 0.1 μm were supported on the cell wall of the honeycomb body in such a manner that a concentration of the ceria particles decreases in the cell wall of the honeycomb body from a gas outlet cell side to a gas inlet cell side, and the honeycomb filter was completed.

Specifically, the ceria ($CeO_2$) particles having an average particle diameter of 0.1 μm were dispersed in water to prepare a slurry of $CeO_2$. Next, the gas in which the slurry had been distributed was put on a carrier gas and introduced from one end face of the honeycomb body (an end face on a side from which a gas would flow out after completion of the honeycomb filter). At this time, the carrier gas was made to flow at a space velocity of 72000 (1/h).

Thereafter, the honeycomb body with the slurry attached thereto was heated at 700°C, and the honeycomb body with the ceria particles supported thereon was completed.

Here, in the present example, the ceria particles were supported on the honeycomb body at a ratio of 60 g of the ceria particles per 1 liter of the honeycomb body.

Evaluation of honeycomb filter (Supporting state (concentration) of ceria particles)

The cell wall with ceria particles supported thereon were cut crosswise along the longitudinal direction of the honeycomb filter, and the scanning electron microscope (SEM) image of the cross section thereof was photographed. Then, by using a commercially available image analysis software ("Particle Analysis III", manufactured by Sumitomo Metal Technology Inc.), a space portion (fine pore portion) and a particle portion (ceramic particles and the like) were separated in the obtained photograph for binarization and image analysis, and thereby the percentage (%) of the space portion was calculated.

At this time, 10 sites of 2 mm square of the cell walls were randomly selected, and as illustrated in the partially enlarged view of Fig. 2(b), the cell wall was divided in the thickness direction thereof into three equal parts, Regions A to C (Region A: the region closest to the gas inlet cell out of the regions divided into the three equal parts, Region B: the middle region out of the regions divided into the three equal parts, and Region C: the region closest to the gas outlet cell out of the regions divided into the three equal parts) to calculate the percentage of the space portion in each of the regions. Table 1 shows the results.

Here, in this evaluation, the percentage of the space portion was calculated, and thereby the percentage of the pores per unit area was calculated.

(Measurement of capture efficiency of PMs)

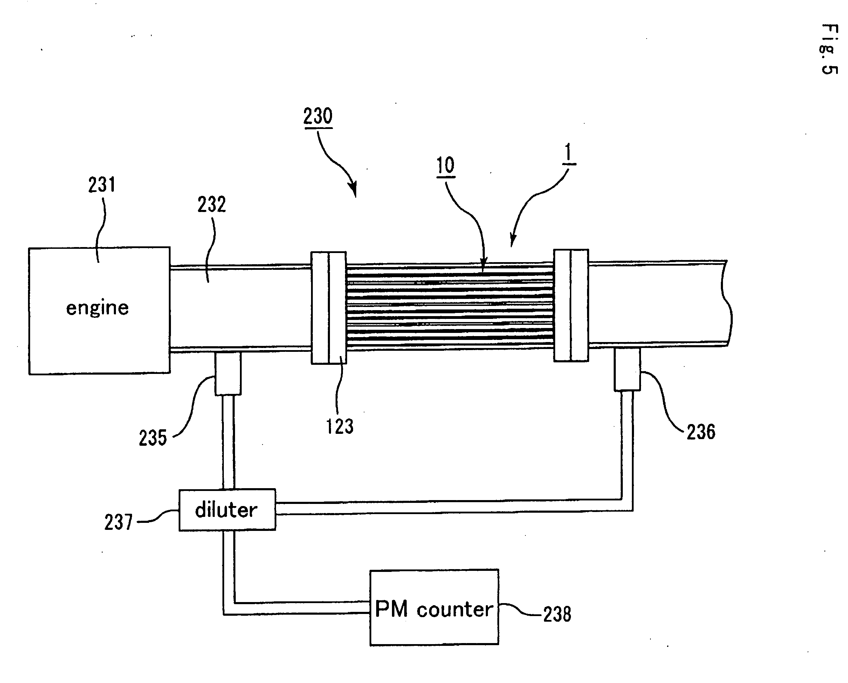

A capture efficiency of PMs was measured using a capture efficiency measuring device 230 as illustrated in Fig. 5. Fig. 5 is an explanatory view of a capture efficiency measuring device.

This capturing efficiency measuring device 230 is configured as a scanning mobility particle sizer (SMPS) that is provided with: 2 liters of a common-rail-type diesel engine 231; exhaust gas pipes 232 that allow the exhaust gases from the engine 231 to pass through; a honeycomb filter 1 in which a honeycomb body 10 is disposed in a metal casing 123 and that is connected to the exhaust gas pipes 232; a sampler 235 used for sampling the exhaust gases before passing through the honeycomb filter 1; a sampler 236 used for sampling the exhaust gases after passing through the honeycomb filter 1; a diluter 237 used for diluting the exhaust gases sampled by the samplers 235, 236; and a PM counter 238 (a condensation particle counter 3022A-S, manufactured by TSI, Inc.) used for measuring the amount of PMs contained in the diluted exhaust gases.

Next, the measuring procedures will be described. The engine 231 was driven at the number of revolutions of 2000 $min^{-1}$ and a torque of 47 Nm, and the exhaust gases from the engine 231 were allowed to flow through the honeycomb filter 1. At this time, the amount of PMs $P_0$ in the exhaust gases before passing through the honeycomb filter 1 and the amount of PMs $P_1$ in the exhaust gases after passing through the honeycomb filter 1 were obtained by using the PM counter 238. Then, the capturing efficiency was calculated based upon the following equation (1).

$$\text{Capture efficiency (\%)} = (P_0 - P_1) / P_0 \times 100 \ldots (1)$$

(Example 2)

A honeycomb filter was manufactured in the same manner as in Example 1, except that in the process D in Example 1, the space velocity of the carrier gas was changed to 5000 (1/h) when the ceria particles were supported on the cell wall.

And the same evaluations as in Example 1 were made regarding the honeycomb filter of Example 2.

(Comparative Example 1)

A honeycomb member was manufactured in the same manner as in the process A in Example 1, subsequently the honeycomb member was immersed into the same slurry as the slurry of $CeO_2$ used in the process D in Example 1, thereafter a drying treatment was carried out at 110°C for two hours, and then a firing treatment was performed at 700°C for one hour, to support ceria particles on the honeycomb member.

Subsequently, members for an end portion were prepared in the same manner as in the process B in Example 1, and furthermore, a honeycomb member with ceria particles supported thereon, and the members for an end portion were placed inside a casing in the same manner as in the process C in Example 1, leading to the completion of the honeycomb filter.

The same evaluations as in Example 1 were made regarding the honeycomb filter of Comparative Example 1.

[Table 1]

| | Honeycomb body | | Honeycomb filter | | | |
|---|---|---|---|---|---|---|
| | Porosity | Average pore diameter | Percentage of space (pores) (Note) | | | Capture efficiency of PMs |
| | | | Region A | Region B | Region C | |
| | (%) | (μm) | (%) | | | (%) |
| Example 1 | 86 | 35 | 85.0 | 82.5 | 80.0 | 88 |
| Example 2 | 86 | 35 | 86.0 | 84.0 | 77.5 | 90 |
| Comparative Example 1 | 86 | 35 | 82.5 | 82.5 | 82.5 | 65 |
| Note: Region A = gas inlet cell side, Region B = middle portion, Region C = gas outlet cell side | | | | | | |

As shown in Table 1, in the honeycomb filters according to Examples 1 and 2, an amount (concentration) of the ceria particles supported decreases (lowers) in the cell wall from a gas outlet cell side to a gas inlet cell side; whereas in the honeycomb filter according to Comparative Example 1, ceria particles are uniformly supported on the cell wall. This shows that the percentage of pores increases in the cell wall from a gas outlet cell side to a gas inlet cell side in Examples 1 and 2, and the percentage of pores is the same over the entirety of the cell wall in Comparative Example 1. And it has become apparent that in the case where ceria particles are supported on the cell wall with a concentration gradient being set up thereon, it is possible to achieve a high capture efficiency just as in the case of the honeycomb filters according to Examples 1 and 2; whereas ceria particles supported uniformly on the cell wall just like the honeycomb filter in Comparative Example 1 involves a lowered capture efficiency.

(Second embodiment)

The honeycomb filter of the first embodiment is configured so that the honeycomb member configuring the honeycomb body is formed by: an integrally formed honeycomb member mainly including inorganic fibers; and a member for an end portion disposed on both end portions of the honeycomb body. In contrast to this, the honeycomb filter of the present embodiment is configured so that the honeycomb member configuring the honeycomb body is formed by lamination of a plurality of lamination members.
Here, the honeycomb filter of the present embodiment has the same configuration as that of the honeycomb filter of the first embodiment, except that the configurations of the honeycomb bodies are different. Therefore, the following description will discuss the honeycomb filter of the present embodiment, focusing on the honeycomb body.
Hereinafter, the honeycomb filter of the second embodiment will be described in reference to the drawings.

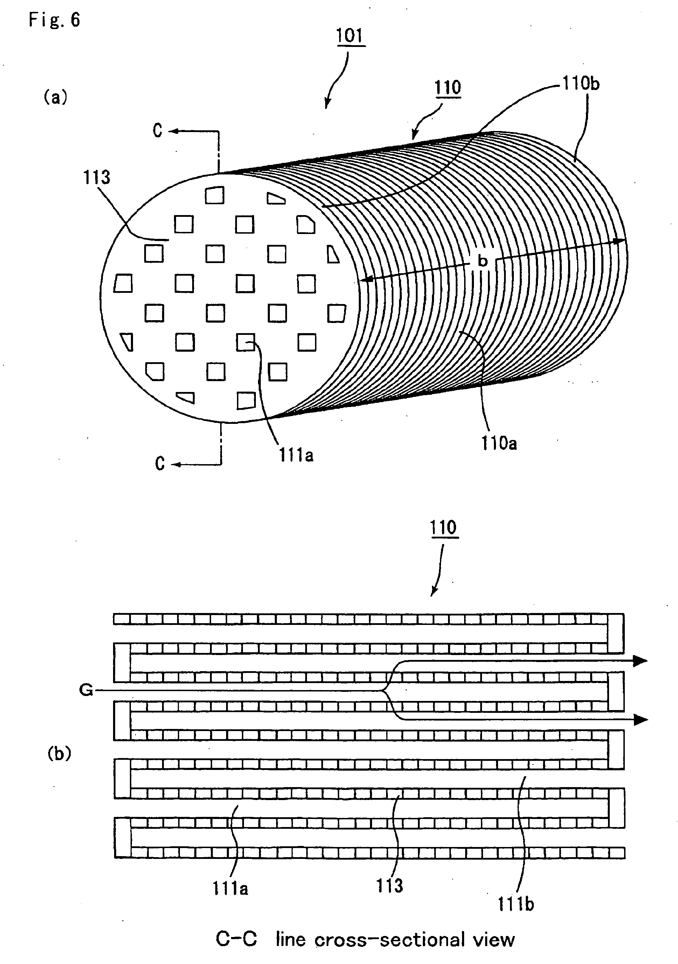

Fig. 6(a) is a perspective view that schematically illustrates one example of a honeycomb filter according to the second embodiment, and Fig. 6 (b) is a cross-sectional view taken along line C-C of Fig. 6(a).
As illustrated in Figs. 6 (a) and 6 (b), a honeycomb filter 101 according to the second embodiment comprises: a round pillar-shaped honeycomb body 110, in which a plurality of cells 111a, 111b are disposed in parallel with one another in a longitudinal direction (a direction shown by an arrow b in Fig. 6(a)) with a cell wall 113 therebetween and either one of the end portions of each of the cells is sealed; and ceramic particles (not illustrated) such as ceria particles supported on the cell wall 113.
And the honeycomb body 110 is configured by: a honeycomb member formed by laminating a plurality of disc-shaped lamination members 110a having a thickness of 0.1 to 20 mm; and members for end portion 110b disposed on both end faces of the honeycomb member. Here, the through holes provided in each of the lamination members 110a are superimposed on one another, and thereby the lamination members 110a are laminated so as to form the cells. Furthermore, the members for an end portion 110b, with through holes provided in a predetermined position, are disposed so as to seal only either one of the cells.
In the honeycomb filter 101, exhaust gases G introduced from one end face of the honeycomb body 110 (left side in Fig. 6 (b)) into a cell 111a (gas inlet cell 111a) are allowed to flow out from another end face (a cell 111b (gas outlet cell 111b) in which the right side thereof is open in Fig. 6(b)), after always passing through a cell wall 113 separating the cell 111a and the cell 111b.
Accordingly, in the honeycomb filter 101, PMs in the exhaust gases G will be captured on the cell wall 113.
Furthermore, in the honeycomb body 110, since the cell wall 113 of the honeycomb body 110 has a porosity (porosity in a state that ceramic particles are not supported) of 75 to 95%, a high porosity, it is possible to perform deep-layer filtering of PMs.
In the honeycomb filter 101, the lamination members 110a configuring the honeycomb body 110 mainly includes inorganic fibers, and a predetermined number of the lamination members are laminated.

Here, the respective lamination members 110a may be bonded to one another by interposing an inorganic adhesive or the like, or may be simply physically laminated to one another, but are desirably simply physically laminated to one another. This is because the simply physical lamination will prevent an increase in pressure loss caused by interference of the flow of exhaust gases at the joined portions (or bonded portions) to which an adhesive or the like has been applied. Here, in the case where the respective lamination members are simply physically laminated to one another, the formation of the honeycomb member involves the lamination in the metal casing and the application of pressure.

Here, each of the lamination members 110a has the same configuration as that of the honeycomb member 10a, except that the length thereof in the longitudinal direction is different (thin).

The members for an end portion 110b configuring the honeycomb body 110 are identical to the members for an end portion 10b configuring the honeycomb filter of the first embodiment.

Next, a method for manufacturing the honeycomb filter according to the present embodiment will be briefly described.

(1) In the first place, the required number of lamination members is manufactured.

First, a sheet-forming slurry is prepared by:

sufficiently mixing inorganic fibers such as alumina fibers with an inorganic matter such as glass fibers; adding an appropriate amount of water, an organic binder, an inorganic binder, etc. thereto on demand; and sufficiently stirring them.

Next, the sheet-forming slurry is formed into a sheet by using a mesh, and the resulting product is dried at a temperature of 100 to 200°C, and a stamping process is further carried out thereon so that cells are formed over almost the entire face with equal intervals, and then a heating treatment is performed at a temperature less than the heat resistance temperature of the inorganic fibers such as alumina fibers and not less than the heat resistance temperature of the inorganic matter such as glass fibers (for example, 900 to 1050°C) to manufacture lamination members.

(2) Members for an end portion are manufactured separately from the lamination members.

The members for an end portion are manufactured in the same manner as in the process (6) in the method for manufacturing the honeycomb filter of the first embodiment.

(3) Subsequently, lamination members are laminated in a casing, concurrently with members for an end portion being disposed on both end faces thereof, to manufacture a honeycomb body.

More specifically, as illustrated in Fig. 4(b), a metal casing 123 having a can-type (cylindrical) shape with a fixing metal member installed on one side, which was also employed in the method for manufacturing the honeycomb filter of the first embodiment, is prepared, and first one member for an end portion is disposed in the casing 123, and thereafter a predetermined number of lamination members are laminated. And lastly, another member for an end portion is disposed, which is followed by pressing, and subsequently a fixing metal member is installed and fixed on the other side; thereby it is possible to manufacture a honeycomb body. Of course, in this process, each of the lamination members is laminated so that through holes are superimposed on one another.

Here, since the lamination members become thinner during the pressing, resulting in a decrease in the porosity thereof, it is necessary to manufacture the lamination members taking this reduction into account.

(4) Next, ceramic particles are supported on the cell wall of the honeycomb body in such a manner that a concentration of the ceramic particles such as ceria particles decreases in the cell wall of the honeycomb body from a gas outlet cell side to a gas inlet cell side, and the honeycomb filter was completed.

Here, ceramic particles such as ceria particles may be supported in the same manner as in the process of (5) of the method for manufacturing the honeycomb filter of the first embodiment.

Hereinafter, the effects of the honeycomb filter of the present embodiment will be cited.

(1) In the honeycomb filter of the present embodiment as well, it is possible to exert the same effects (1) to (3) as in the honeycomb filter of the first embodiment.

(2) In addition, since the honeycomb body comprises a honeycomb member in which lamination members are laminated in the longitudinal direction thereof, even when a big temperature difference arises on the entirety of the honeycomb filter during the regenerating treatment or the like, the temperature difference that is generated on the respective lamination members is small, so is the subsequent thermal stress thereof, resulting in a honeycomb filter less susceptible to damage.

(Other embodiments)

The ceramic particles forming the honeycomb filter of the present invention are not necessarily oxide catalyst particles such as ceria particles.

Therefore, the ceramic particles may be particles made of oxide ceramics etc. such as mullite, alumina, silica, titania, and zirconia.

The average particle diameter of the ceramic particles is desirably smaller than the average pore diameter of the honeycomb member. This is because when the ceramic particles are supported on the cell wall, the ceramic particles are surely supported inside the cell wall.

Specifically, the average pore diameter of the ceramic particles is desirably 0.05 to 0.2 $\mu$m.

In the case where the honeycomb body mainly includes inorganic fibers, with respect to the fiber length of the inorganic fibers, the desirable lower limit value is 0.1 mm, and the desirable upper limit value is 100 mm.

The fiber length of less than 0.1 mm makes it difficult to entangle the inorganic fibers with one another and firmly fix the inorganic fibers to one another by interposing an inorganic matter, sometimes failing to provide sufficient strength of the honeycomb member; in contrast, the fiber length of more than 100 mm makes it difficult to manufacture a homogeneous honeycomb member, sometimes failing to provide a honeycomb body having sufficient strength.

The more desirable lower limit value of the fiber length is 0.5 mm, and the more desirable upper limit value is 50 mm.

In the case where the honeycomb body mainly includes inorganic fibers, with respect to the fiber diameter of the inorganic fibers, the desirable lower limit value is 0.3 $\mu$m, and the desirable upper limit value is 30 $\mu$m.

The fiber diameter of less than 0.3 $\mu$m tends to cause the inorganic fiber to be easily broken, with the result that the obtained honeycomb member becomes susceptible to wind erosion; in contrast, the fiber diameter of more than 30 $\mu$m makes it difficult for inorganic fibers to be firmly fixed to one another by interposing an inorganic matter such as a glass, sometimes failing to provide sufficient strength.

The lower limit value of the fiber diameter is more desirably 0.5 $\mu$m, and the upper limit value thereof is more desirably 15 $\mu$m.

The average pore diameter of the honeycomb member is desirably 1 to 100 $\mu$m.

In the case where the average pore diameter is less than 1 $\mu$m, deep-layer filtering of PMs is not performed, with the result that a pressure loss may increase in a short period of time. On the other hand, when the average pore diameter is more than 100 $\mu$m, PMs may easily pass through the pores, resulting in failure to function as a filter.

Here, the porosity and pore diameter can be measured through conventionally known methods, such as a measuring method using a mercury porosimeter, Archimedes method, and a measuring method using a scanning electron microscope (SEM).

Moreover, in the honeycomb body, a thickness of the cell wall is desirably 0.2 mm or more. The thickness of less than 0.2 mm may cause insufficient strength of the honeycomb body.

Here, the desirable upper limit of the thickness of the cell wall is less than 5.0 mm. In the case where the thickness of the cell wall is too high, the pressure loss may be too high. Moreover, ashes generated upon burning of PMs tend to enter the pores deeply, making it difficult to draw the ashes.

And the desirable aperture ratio of the honeycomb body is 30 to 60%.

In the case where the aperture ratio is less than 30%, the pressure loss of the honeycomb filter may be too high; and the aperture ratio of more than 60% may cause insufficient strength of the honeycomb filter.

In the case where the honeycomb body mainly includes inorganic fibers, the cell density on the plane perpendicular to the longitudinal direction of the cells is not particularly limited, and the lower limit thereof is desirably 0.16 pcs/cm$^2$ (1.0 pc/in$^2$), and the upper limit thereof is desirably 93 pcs/cm$^2$ (600 pcs/in$^2$); more desirably, the lower limit value is 0.62 pcs/cm$^2$ (4.0 pcs/in$^2$), and the upper limit value is 77.5 pcs/cm$^2$ (500 pcs/in$^2$).

In the case where the honeycomb body mainly includes inorganic fibers, the cell size on the plane perpendicular to the longitudinal direction of the cells is not particularly limited, and the lower limit thereof is desirably 0.8 mm $\times$ 0.8 mm, and the upper limit thereof is desirably 16 mm $\times$ 16 mm.

In the case where the honeycomb body mainly includes inorganic fibers, the apparent density of the honeycomb body is desirably 0.04 to 0.4 g/cm$^3$.

The apparent density of less than 0.04 g/cm$^3$ may cause insufficient strength; whereas in the case where the apparent density exceeds 0.4 g/cm$^3$, the temperature of the honeycomb filter tends not to increase during the regenerating treatment and is disadvantageous in continuously burning PMs.

Here, the apparent density of the honeycomb body refers to a value obtained by dividing the mass (g) of the honeycomb body by the apparent volume (cm$^3$) of the honeycomb body. And the apparent volume of the honeycomb body refers to a volume obtained by calculating the outer shape of the honeycomb body, a volume including pores and apertures (cells) of the honeycomb body.

In the case where the honeycomb body mainly includes inorganic fibers, the tensile strength of the honeycomb member configuring the honeycomb body is desirably 0.3 MPa or more, and more desirably 0.4 MPa or more. The tensile strength of less than 0.3 MPa may provide insufficient reliability to the honeycomb filter.

Here, the tensile strength can be measured by forming the honeycomb member into a sheet shape, with the two end faces thereof being fixed by jigs, and by measuring this with the use of an INSTRON type universal tensile meter.

In the honeycomb filter, the shape of the cross section perpendicular to the longitudinal direction of the cells is not particularly limited to a square shape, and any desired shape such as a triangular shape, a hexagonal shape, an octagonal shape, a dodecagonal shape, a round shape, an elliptical shape and a star shape may be used.

The shape of the cross section perpendicular to the longitudinal direction of the honeycomb filter of the present invention is not particularly limited to a round shape, and various shapes such as a rectangular shape may be used; however, it is desirable to use a shape enclosed only by a curved line or by curved lines and straight lines. In addition to a round shape, specific examples thereof are a rectangular pillar shape, an elongated round shape (racetrack shape), a shape in which one portion of a simple closed curved line such as a rectangular pillar shape or a racetrack shape has a recess portion (concave shape), and the like.

The member for an end portion configuring the honeycomb body is not particularly limited as long as through holes are formed in a predetermined position, and the material thereof may be the same material as that of the honeycomb member or may be a porous or solid (dense) metal ceramic.

Here, in the case where a metal member for an end portion is used as the member for an end portion, it is possible to simultaneously give a role as a fixing metal member to the member for an end portion by welding the member for an end portion upon disposing the member for an end portion in a metal casing.

Examples of the material for the casing are metals etc. such as stainless steel (SUS), aluminum, and iron.

A plunger-type molding machine to be used upon extrusion molding a composition for molding in the process for manufacturing the honeycomb member will be described in further detail in reference to the drawing.

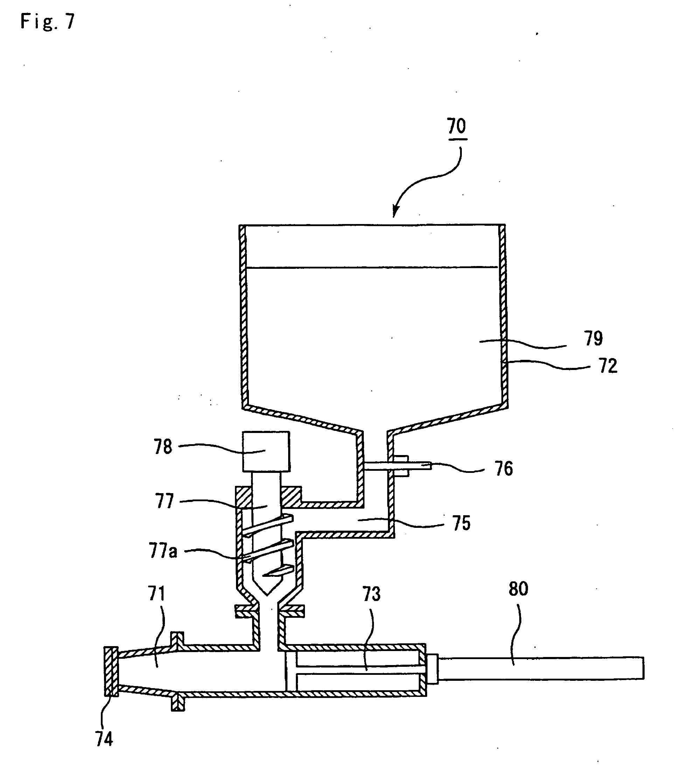

Fig. 7 is a cross-sectional view that schematically illustrates a plunger-type molding machine.

A plunger-type molding machine 70 is formed by: a cylinder 71; a piston 73 provided with a mechanism capable of reciprocally moving between the front side and the rear side in the cylinder (transverse direction in the figure); a die 74 that is attached to the tip of the cylinder, and has pores formed therein so as to carry out an extrusion-molding process to form a pillar-shaped molded body with a large number of cells formed in the longitudinal direction; and a mixture tank 72, placed on the upper portion of the cylinder 71, to which a pipe 75 is connected from the cylinder 71. Moreover, a shutter 76 is placed just below the mixture tank 72 so that the carry-in operation of the mixture from the mixture tank 72 can be interrupted. Here, a screw 77 with blades 77a is attached to the pipe 75 and allowed to rotate by a motor 78. The size of the blade 77a is virtually the same as the diameter of the pipe so that the mixture (composition) 79 is hardly allowed to flow reversely. Here, the mixture prepared in the mixing process is carried in the mixture tank 72.

Upon manufacturing a molded body by using the plunger-type molding machine 70, first, the shutter 76 is opened, and the mixture, obtained in the mixing process, is carried in the cylinder 71 from the mixture tank 72 by rotating the screw. At this time, the piston 73 is moved to the end portion of the cylinder 71 on the right side in Fig. 7 according to the carry-in amount of the mixture.

When the cylinder 71 is filled with the mixture, the shutter 76 is closed and the rotation of the screw 77 is simultaneously stopped. When the piston 73 is pressed and shoved into the die side with the inside of the cylinder 71 being filled with the mixture 79, the mixture is extruded through the die 74 so that a pillar-shaped molded body in which a plurality of cells are formed with a wall portion therebetween is continuously formed. At this time, according to the shape of the pore formed in the die, cells having the corresponding shape are formed. By repeating these processes, a molded body can be manufactured. Depending on the viscosity and the like, a molded body can be continuously manufactured, by rotating the screw 77 with the cylinder 73 being stopped.

Here, in the plunger-type molding machine 70 illustrated in Fig. 7, an oil cylinder 80 is used as the driving source used for shifting the piston 73; however, an air cylinder may be used, or a ball screw or the like may also be used.

Examples of the molding machine to be used upon extrusion molding a composition (mixture) for molding include a single-axis screw-type extrusion-molding machine, a multi-axis screw-type extrusion-molding machine, and the like, in addition to a plunger-type molding machine.

In the method for manufacturing the honeycomb filter of the first embodiment, a honeycomb member is manufactured by molding a composition for molding with a plunger-type molding machine, and thereafter carrying out a drying treatment, a degreasing treatment, and a firing treatment thereon; however, the honeycomb member may be manufactured by other methods.

Examples of other methods for manufacturing a honeycomb member include a method with use of a frame member (hereinafter, also referred to as a manufacturing method with use of a frame member) made of: a bottom plate on which pillar members used for forming cells of the honeycomb member are installed vertically to the main surface and in a lattice pattern in a plan view; and an outer frame member provided so as to enclose the periphery of the bottom plate and the pillar members. Hereinafter, this method will be described in further detail.

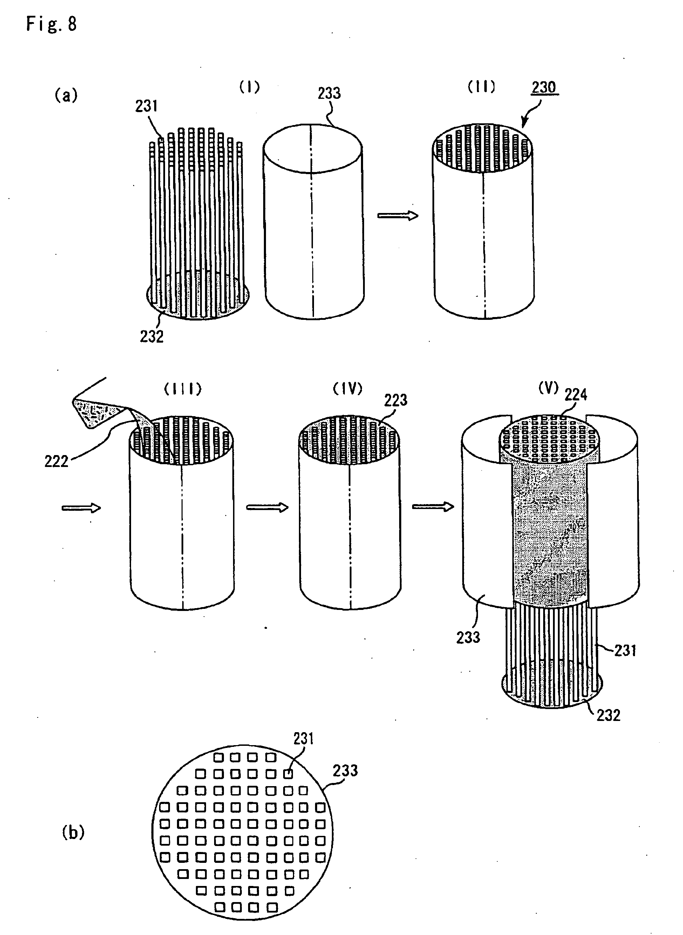

Figs. 8 (a) (I) to (VI) are schematic views for describing part of processes for a method for manufacturing a honeycomb member used for a frame member, and Fig. 8 (b) is a top view that schematically illustrates the inside of the frame member in which pillar members are vertically installed.

In the method for manufacturing the frame member,

(1) first, a composition for molding containing a thermosetting resin is prepared by mixing inorganic fibers mainly forming a honeycomb body, an inorganic matter that is to firmly fix inorganic fibers to one another through the subsequent processes, and a thermosetting resin, and furthermore mixing a solvent, a dispersant, a curing agent, and the like, if necessary.

(2) Next, the frame member is filled with the composition for molding containing a thermosetting resin.

As the frame member, there is employed a frame member 230 (see Fig. 8(a) (II)) made of: a bottom plate 232 on which pillar members 231 used for forming cells of the honeycomb member are installed vertically to the main surface and in a lattice pattern in a plan view (see Fig. 8 (a) (I) and Fig. 8(b)); and an outer frame member 233 (see Fig. 8(a) (I)) provided so as to enclose the periphery of the bottom plate 232 and the pillar members 231.

And the frame member 230 is filled with a composition for molding containing a thermosetting resin 222 (see Fig. 8(a) (III)). Here, a metal frame member can be preferably used as a frame member.

(3) Next, a thermosetting resin in the composition for molding containing a thermosetting resin filled into the frame member 230 is cured, and a cured resin body 223 is formed inside the frame member 230 (see Fig. 8(a) (IV)).

(4) Next, the frame members 230 are removed from a cured resin body 223.

By detaching the pillar members 231, cells are formed in portions that have been occupied by the pillar members 231, and these are allowed to form cells for the honeycomb member through the following processes (see Fig. 8(a) (V)).

In this case, it is desirable to preliminarily form a draft angle of about 2° in each pillar member 231 so that the pillar members 231 can be easily drawn from the cured resin body 223.

Moreover, the outer frame member 233 is separately detached so that a pillar-shaped molded body 224 is formed.

A honeycomb member mainly including inorganic fibers can be manufactured by forming the molded body 224 as thus described, and thereafter carrying out a degreasing treatment and a firing treatment thereon in the same manner as in the method for manufacturing the honeycomb filter of the first embodiment.

In addition, in the manufacturing method with use of a frame member, the method may be used in which: a cured resin body 223 is formed by using core sand used for casting of a mold, and the cores made of a resin material, low-melting-point metal, water-soluble salts on which a high-pressure press-molding process is carried out, and the like, instead of the pillar members 231; and thereafter the cores are removed by methods, such as a washing and elution method, a burning method, a thermal-fusing method, instead of drawing the pillar members 231.

Examples of other methods for manufacturing the honeycomb member include a method with use of a vessel (hereinafter, also referred to as a manufacturing method through the three-dimensional sheet-forming process) that is made of: a vessel main body; a mesh formed on the bottom portion of the vessel main body; pillar-shaped masks that are installed vertically to the mesh and in a lattice pattern in a plan view, and are used for forming cells of the honeycomb member; and a liquid-filling unit that forms a space surrounded by the pillar-shaped masks, with the mesh serving as the bottom face, in which the mixture (composition) is carried. Hereinafter, this method will be described in further detail.

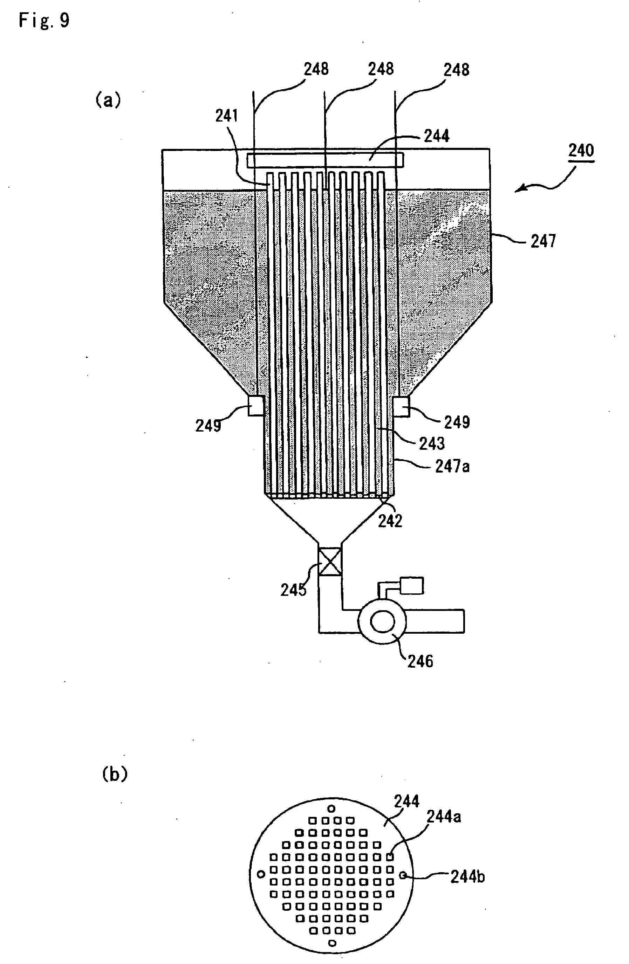

Fig. 9(a) is a view that schematically illustrates a vessel used in a manufacturing method through the three-dimensional sheet-forming process, and Fig. 9 (b) is a top view that schematically illustrates a vessel used in the manufacturing method through the three-dimensional sheet-forming process.

In the manufacturing method with use of a vessel,

(1) a composition for molding is first prepared. The composition for molding can be prepared by the same method as the method for manufacturing the honeycomb filter of the first embodiment. In this method, a composition for molding with an increased blending amount of water and having a viscosity reduced so as to enable sheet-forming is prepared.

(2) Next, the composition for molding is carried in a liquid-filling unit 243 of the vessel 240 illustrated in Fig. 9 (a) . The vessel 240 illustrated in Fig. 9 (a) is configured by a vessel main body 247; a mesh 242 formed on the bottom portion of the vessel main body 247; pillar-shaped masks 241 that are installed vertically to the mesh 242 and in a lattice pattern in a plan view, and are used for forming cells of the honeycomb member; and a liquid-filling unit 243 that forms a space surrounded by the pillar-shaped masks 241, with the mesh 242 serving as the bottom face, in which the mixture (composition) is carried.

Moreover, the vessel 240 is provided with: a pressing plate 244 with through holes 244a having a lattice pattern being formed in portions corresponding to the pillar-shaped masks 241; a cock 245 and a pump 246 used for draining; a press driving unit used for press-inserting the pressing plate 244 onto the vessel main body 247; and a vibration unit, not illustrated, used for giving vibration to the vessel main body.

Here, the preparation of the composition for molding in the process (1) may be performed in the vessel 240.

After carrying the composition for molding in the liquid-filling unit, the mixture filled into the liquid-filling unit 243 is stirred as needed. The stirring process may be carried out by activating a vibration unit, not illustrated, used for giving vibration to the vessel main body. With respect to the specific vibration unit, for example, an oscillator provided with an ultrasonic resonator, a vibrator and the like may be used, and the unit may be installed on the side face of the vessel main body 247. This may also be installed in the vessel main body 247.

(3) Next, a dehydration treatment is carried out in which moisture in the composition for molding is sucked so that water in the composition for molding is drained through the mesh 242.

In this case, the cock 245 placed on the lower side of the mesh 242 is opened, and the pump 246 is actuated. Thus, the composition for molding, filled into the liquid-filling unit 243, is sucked and filtered, and allowed to drop through the mesh 242, and drained through the cock 245. Consequently, the water contained in the composition for molding has been dehydrated, so that a dehydrated body having a predetermined height from the bottom portion of the liquid-filling unit is formed.

After the dehydration treatment, the dehydrated body that has been dehydrated in the dehydration process may undergo a pressing process for compressing it with the pressing plate from the upper face. By carrying out the compressing process by applying a pressure thereto, a compressed body having a predetermined length, appropriate density and porosity, can be formed.

The apparatus and the method used for the pressing treatment are not particularly limited to those described below. A vessel 240, illustrated in Fig. 9 (a), is provided with motors 249 and four ball screws 248 coupled to the motors 249, both serving as a press driving unit; the four ball screws 248 are threaded with four screw holes 244b formed in a pressing plate 244; thus, the four ball screws 248 rotate in synchronism with one another so that the pressing plate 244 can be raised and lowered.

Moreover, the pressing plate 244 is prepared as a plate, as illustrated in Fig. 9(b), with through holes being formed in a lattice pattern in portions corresponding to the pillar masks 241.

Therefore, when the four motors 249 are driven in synchronism with one another, the pressing plate 244 is lowered downward so that the dehydrated body is compressed in the portion corresponding to the lower portion 247a of the vessel main body to be formed into a compressed body. As illustrated in Fig. 9(a), the lower portion 247a of the vessel main body has a shape corresponding to a honeycomb member so that when the pressing plate 244 is lowered to a portion at which the motors 249 are disposed, a compressed body having a round pillar shape is formed.

Here, the lower portion 247a of the vessel main body has a cylindrical shape, and the dehydrated body is compressed by the pressing plate 244, and filled into the lower portion 247a of the vessel main body to be formed in the shape of the honeycomb member.

(4) Next, by removing the pillar-shaped masks from the dehydrated body, the mask-removing process is carried out to form a pillar-shaped molded body with a large number of cells formed in the longitudinal direction. Thus, a pillar-shaped molded body having cells with a predetermined shape and predetermined length and density can be obtained.

And a honeycomb member mainly including inorganic fibers can be manufactured by forming the molded body as thus described, and thereafter carrying out a drying treatment, a degreasing treatment, and a firing treatment thereon in the same manner as in the method for manufacturing the honeycomb filter of the first embodiment.

With respect to the honeycomb body configuring the honeycomb filter of the present invention, a honeycomb body mainly including inorganic fibers has been described so far. The honeycomb body configuring the honeycomb filter of the present invention is not particularly limited to a honeycomb body mainly including inorganic fibers, and may be made of a porous ceramic as long as it has a porosity of the cell wall of 75 to 95%.

Examples of the specific material for the porous ceramic may include: nitride ceramics such as aluminum nitride, silicon nitride, boron nitride, and titanium nitride; carbide ceramics such as silicon carbide, zirconium carbide, titanium carbide, tantalum carbide, and tungsten carbide; a complex of metal and nitride ceramics; a complex of a metal and carbide ceramics; and the like.

Moreover, silicon-containing ceramics prepared by blending metal silicon into the above-mentioned ceramics and a ceramic material such as ceramics bonded by silicon or a silicate compound may be used as the material of the porous ceramic. Cordierite, aluminum titanate, and the like may also be used as the material thereof.

BRIEF DESCRIPTION OF THE DRAWINGS

Fig. 1(a) is a perspective view that schematically illustrates one example of a honeycomb filter according to the first embodiment, and Fig. 1(b) is a cross-sectional view taken along line A-A of Fig. 1(a).

Fig. 2 (a) is a schematic view for describing an embodiment of ceria particles supported on a cell wall, in a honeycomb filter according to the first embodiment. Fig. 2(b) is a further enlarged schematic view of a portion B in Fig. 2(a).

Fig. 3 is a cross-sectional view that schematically illustrates one example of an embodiment in which inorganic fibers are firmly fixed to one another by interposing an inorganic matter.

Fig. 4(a) is a perspective view that schematically illustrates a honeycomb member and a member for an end portion that configure a honeycomb body, and Fig. 4 (b) is a perspective view for describing a method for providing the member for an end portion on both end portions of the honeycomb body illustrated in Fig. 4(a).

Fig. 5 is an explanatory view of a capture efficiency measuring device.

Fig. 6(a) is a perspective view that schematically illustrates one example of a honeycomb filter according to the second embodiment, and Fig. 6 (b) is a cross-sectional view taken along line C-C of Fig. 6(a).

Fig. 7 is a cross-sectional view that schematically illustrates a plunger-type molding machine.

Figs. 8 (a) (I) to (VI) are schematic views for describing part of processes for a method for manufacturing a honeycomb member used for a frame member, and Fig. 8 (b) is a top view that schematically illustrates the inside of the frame member in which pillar members are vertically installed.

Fig. 9(a) is a view that schematically illustrates a vessel used in a manufacturing method through the three-dimensional sheet-forming process, and Fig. 9 (b) is a top view that schematically illustrates a vessel used in the manufacturing method through the three-dimensional sheet-forming process.

EXPLANATION OF SYMBOLS

| 1, 101 | Honeycomb filter |
| 10, 110 | Honeycomb body |
| 10a | Honeycomb member |
| 10b, 110b | Member for an end portion |
| 11a, 11b, 111a, 111b | Cell |
| 13, 113 | Cell wall |
| 110a | Lamination member |
| 123 | Casing |
| G | Exhaust gas |

**Claims**

1. A honeycomb filter, comprising:

    a pillar-shaped honeycomb body in which a plurality of cells are disposed in parallel with one another in a longitudinal direction with a cell wall therebetween, either one of the end portions of each of said cells is sealed, and gases introduced from one end face flow out from an other end face; and
    ceramic particles supported on the cell wall,
    a porosity of the cell wall of said honeycomb body being 75 to 95%, and
    said ceramic particles being supported in such a manner that a concentration of said ceramic particles decreases in said cell wall from a side of a cell in which a gas outlet side is open to a side of an other cell in which a gas inlet side is open.

2. The honeycomb filter according to claim 1,
    wherein
    said ceramic particles are particles containing an oxide catalyst.

3. The honeycomb filter according to claim 1 or 2,
    wherein
    said ceramic particles are particles containing ceria.

4. The honeycomb filter according to any of claims 1 to 3,
    wherein
    said honeycomb body mainly includes inorganic fibers.

5. The honeycomb filter according to claim 4,
    wherein
    said honeycomb body comprises an integrally formed honeycomb member.

6. The honeycomb filter according to claim 4,
    wherein
    said honeycomb body comprises a honeycomb member formed by laminating a plurality of lamination members, with through holes provided therein, in a longitudinal direction in such a manner that said through holes are superimposed on one another.

7. The honeycomb filter according to any of claims 1 to 6,
    wherein
    a member for an end portion is disposed on both end portions of said honeycomb body.

**Patentansprüche**

1. Wabenfilter, umfassend:

   einen säulenförmigen Wabenkörper, worin eine Vielzahl von Zellen parallel zueinander in longitudinaler Richtung mit einer Zellwand zwischen diesen angeordnet ist, wobei einer der Endbereiche einer jeden dieser Zellen abgedichtet ist und Gase, die von einer Endfläche eingeführt sind, von einer anderen Endfläche herausfließen; und
   Keramikteilchen, die auf der Zellwand getragen sind; worin eine Porosität der Zellwand des Wabenkörpers 75 bis 95% ist, und
   wobei die Keramikteilchen derart getragen sind, dass eine Konzentration der Keramikteilchen sich in der Zellwand von einer Seite einer Zelle, worin eine Gasauslassseite offen ist, zu einer Seite einer anderen Zelle vermindert, worin eine Gaseinlassseite offen ist.

2. Wabenfilter nach Anspruch 1, worin die Keramikteilchen Teilchen sind, umfassend einen Oxidkatalysator.

3. Wabenfilter nach Anspruch 1 oder 2, worin die Keramikteilchen Teilchen sind, die Ceroxid umfassen.

4. Wabenfilter nach einem der Ansprüche 1 bis 3, worin der Wabenkörper hauptsächlich anorganische Fasern umfasst.

5. Wabenfilter nach Anspruch 4, worin der Wabenkörper ein integral gebildetes Wabenteil umfasst.

6. Wabenfilter nach Anspruch 4, worin der Wabenkörper ein Wabenteil umfasst, gebildet durch Laminieren einer Vielzahl von Laminationsteilen mit Durchgangslöchern, die darin vorgesehen sind, in einer longitudinalen Richtung in der Art, dass diese Durchgangslöcher übereinandergelagert sind.

7. Wabenfilter nach einem der Ansprüche 1 bis 6, worin ein Teil für einen Endbereich auf beiden Endbereichen des Wabenkörpers angeordnet ist.

**Revendications**

1. Filtre en nid d'abeille, comprenant:

   un corps en nid d'abeille en forme de pilier dans lequel une pluralité de cellules sont disposées en parallèle les unes par rapport aux autres dans une direction longitudinale avec une paroi de cellule entre elles, l'une des parties d'extrémité de chacune desdites cellules est scellée, et des gaz introduits par une face d'extrémité s'écoule en dehors depuis une autre face d'extrémité; et
   des particules de céramique supportées sur la paroi de cellule,
   une porosité de la paroi de cellule dudit corps en nid d'abeille étant de 75 à 95 %, et
   lesdites particules de céramique étant supportées de telle manière qu'une concentration desdites particules de céramique diminue dans ladite paroi de cellule depuis un côté d'une cellule dans laquelle un côté de sortie de gaz est ouvert à un côté d'une autre cellule dans laquelle un côté d'entrée de gaz est ouvert.

2. Filtre en nid d'abeille selon la revendication 1,
   dans lequel
   lesdites particules de céramique sont des particules contenant un catalyseur oxyde.

3. Filtre en nid d'abeille selon la revendication 1 ou 2,
   dans lequel
   lesdites particules de céramique sont des particules contenant de l'oxyde de cérium.

4. Filtre en nid d'abeille selon l'une quelconque des revendication 1 à 3,
   dans lequel
   ledit corps en nid d'abeille comprend principalement des fibres inorganiques.

5. Filtre en nid d'abeille selon la revendication 4,
   dans lequel

ledit corps en nid d'abeille comprend un élément en nid d'abeille intégralement formé.

6. Filtre en nid d'abeille selon la revendication 4,
dans lequel
ledit corps en nid d'abeille comprend un élément en nid d'abeille formé en laminant une pluralité d'éléments de stratification, avec des trous traversants prévus à l'intérieur, dans une direction longitudinale de telle sorte que lesdits trous traversants sont superposés les uns sur les autres.

7. Filtre en nid d'abeille selon l'une quelconque des revendication 1 à 6,
dans lequel
un élément pour une partie d'extrémité est disposé sur les deux parties d'extrémité dudit corps en nid d'abeille.

Fig. 1

(a)

(b)

A-A line cross-sectional view

Fig. 2

(a)

14                                                      13b

G

13a

B            14                        13b

(b)

13a

Region A

Region B

Region C

13b

Fig. 3

51

52

Fig. 4

(a)

10b

10a

(b)

10b

10a

10b

123

EP 1 992 394 B1

Fig. 5

22

Fig. 6

(a)

(b)

C-C line cross-sectional view

Fig. 7

Fig. 8

(a)

(I)    233       (II)   230

231

232

(III)      (IV) 223      (V) 224

222

233     231

232

(b)

231

233

Fig. 9

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005000445 A1

- US 20040176246 A